# Europäisches Patentamt
## European Patent Office
## Office européen des brevets

(11) Veröffentlichungsnummer: **0 324 970 B1**

(12) **EUROPÄISCHE PATENTSCHRIFT**

(45) Veröffentlichungstag der Patentschrift: **26.02.92**

(51) Int. Cl.⁵: **A01D 75/30**

(21) Anmeldenummer: **88121559.4**

(22) Anmeldetag: **23.12.88**

(54) **Selbstfahrender Rasenmäher.**

(30) Priorität: **19.01.88 US 145344**

(43) Veröffentlichungstag der Anmeldung:
**26.07.89 Patentblatt 89/30**

(45) Bekanntmachung des Hinweises auf die
Patenterteilung:
**26.02.92 Patentblatt 92/09**

(84) Benannte Vertragsstaaten:
**DE FR GB**

(56) Entgegenhaltungen:
EP-A- 0 189 619   WO-A-87/06792
DE-A- 2 652 743   DE-A- 3 344 049
GB-A- 761 572   GB-A- 1 074 691
US-A- 2 178 467   US-A- 3 090 184
US-A- 3 757 500   US-A- 3 910 016

(73) Patentinhaber: **DEERE & COMPANY**
**1 John Deere Road**
**Moline, Illinois 61265(US)**

(72) Erfinder: **Phillips, David Lawrence**
**328 E. Fifth Street**
**Ottumwa Iowa 52501(US)**
Erfinder: **Smith, Larry Neil**
**Rural Route 2 Box 142**
**Ottumwa Iowa 52501(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung bezieht sich auf einen selbstfahrenden Rasenmäher mit zwei vorderen Laufrädern, mindestens einem rückwärtigen Laufrad und wenigstens drei mit Bezug auf die Fahrtrichtung jeweils vor einem Laufrad angeordneten Mähwerken, wobei die Laufräder symmetrisch zur Längsmittelachs des Rasenmähers angeordnet sind und die an beiden Seiten des Rasenmähers außen liegenden Mähwerke einen Querabstand zueinander aufweisen.

Bei diesem Rasenmäher (US-A-3 968 630) ist ein Mähwerk vor den vorderen Laufrädern angeordnet, und zwei seitliche Mähwerke erstrecken sich nach außen, wobei sich der Rasenmäher rückwärtig auf zwei nebeneinander angeordneten hinteren Laufrädern abstützt. Alle drei Mähwerke sind symmetrisch zur Längsmittelachse des Rasenmähers angeordnet. Derartige Rasenmäher werden gerne zur Pflege von Grünanlagen, u. a. Parkanlagen oder Golfplätzen, eingesetzt, und da der Rasenrand immer an der gleichen Stelle liegt, laufen die Lauf- und Treibräder des Rasenmähers stets in der gleichen Spur dann, wenn ein Kreis- oder Umfangsschnitt durchgeführt wird. Hierdurch wird der Spurbereich immer stärker verdichtet. Eine solche Verdichtung kann vermieden werden, wenn man einen Querschnitt durchführt, d. h. auf der Rasenfläche nur auf und ab fährt. Dann ist es aber erforderlich, daß die Bedienungsperson die Startposition immer so verändert, daß unterschiedliche Spuren gefahren werden.

Es ist außerdem schon die Möglichkeit bekannt, die Mähbreite durch Querverschiebung der Mähwerke zu ändern (US-A-3 757 500).

Die mit der Erfindung zu lösende Aufgabe wird darin gesehen, durch eine besondere Anordnung der Mähwerke eine zu große Verdichtung der Rasenfläche zu vermeiden. Diese Aufgabe ist nach der Erfindung dadurch gelöst worden, daß eines der mit Querabstand angeordneten Mähwerke mit Bezug auf die Längsmittelachse unsymmetrisch angeordnet ist, so daß insbesondere beim Kreisschnitt, wenn man einmal im Uhrzeigerdrehsinn und nachfolgend entgegen dem Uhrzeigerdrehsinn fährt, immer unterschiedliche Spuren entstehen, also Spuren, die nebeneinander liegen, so daß eine übermäßige Verdichtung verhindert wird.

Für einen Rasenmäher mit symmetrisch zu einer Längsachse angeordneten Mähwerken wird nach der Erfindung ferner vorgeschlagen, daß die Längsachse zur Längsmittelachse des Rasenmähers seitlich parallel versetzt verläuft, wobei der seitliche Versatz der Längsachse wenigstens eine halbe Breite eines der vorderen Laufräder beträgt. Insbesondere, wenn die drei Mähwerke zusammen eine Schnittbreite aufweisen, die größer ist als der äußere Querabstand der vorderen Laufräder, kann nach einem weiteren Vorschlag der Erfindung jeweils ein Mähwerk vor einem vorderen Laufrad und das dritte Mähwerk vor dem rückwärtigen, in der Längsmittelachse des Rasenmähers angelenkten Laufrad angeordnet sein, wobei alle Mähwerke eine gleiche Schnittbreite aufweisen und der Mittenabstand der vorderen Mähwerke der Spurweite des Rasenmähers entspricht. Dabei kann die Mittellinie eines der vorderen Mähwerke mit der Außenseite eines der vorderen Laufräder zusammenfallen.

In der Zeichnung ist ein nachfolgend näher erläutertes Ausführungsbeispiel der Erfindung dargestellt. Es zeigt:

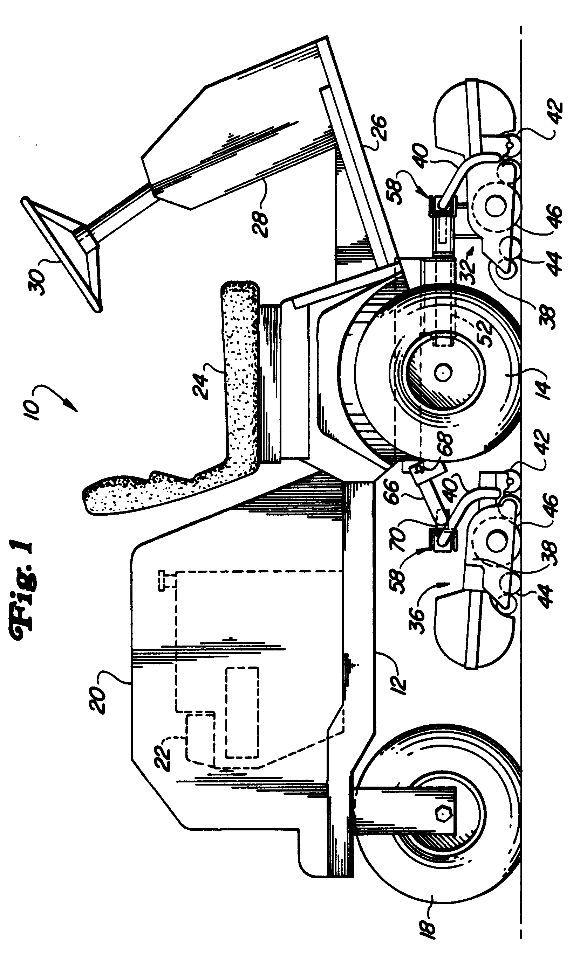

Fig. 1 einen Rasenmäher in Seitenansicht und

Fig. 2 den Rasenmäher nach Fig. 1 in der Draufsicht.

In der Zeichnung ist ein selbstfahrender sogenannter Triplex-Rasenmäher mit 10 bezeichnet, der einen Hauptrahmen 12 aufweist, wobei letzterer auf rechten und linken vorderen angetriebenen Laufrädern 14 und 16 und einem einzigen rückwärtigen lenkbaren Laufrad 18 angeordnet ist. Selbstverständlich können die einzelnen Laufräder auch als Doppelräder ausgebildet sein. Der Rasenmäher 10 ist mit einem Motorgehäuse 20, das auf dem Hauptrahmen 12 vor dem rückwärtigen Laufrad 18 angeordnet ist und einen Motor 22 aufnimmt, versehen. Auf dem Hauptrahmen 12 ist ferner noch zwischen den vorderen Laufrädern 14 und 16 ein Fahrersitz 24 angeordnet, und eine Plattform 26 ist von dem Hauptrahmen 12 aus freitragend nach vorne geführt und nimmt an ihrem frontseitigen Ende ein Podest 28 auf. Bedienungsinstrumente, von denen lediglich ein Lenkrad 30 dargestellt ist, sind an dem Podest angeordnet und können von einem sich auf dem Fahrersitz 24 befindlichen Fahrer leicht erreicht werden.

Identisch ausgebildete rechte und linke vordere Mähwerke 32 und 34 und ein mittiges rückwärtiges Mähwerk 36 sind an dem Hauptrahmen 12 derart angeordnet, daß sie vor den Laufrädern 14, 16 und 18 entsprechende Bahnen schneiden können, und zwar bevor das Gras durch die Laufräder heruntergedrückt wird. Jedes Mähwerk weist einen Rahmen 38 mit einem Befestigungsbügel 40 auf, wobei an jedem Rahmen 38 vordere und rückwärtige Laufrollen 42 und 44 sowie eine Schneidtrommel 46 zwischen den Laufrollen angeordnet sind. Die Mähwerke 32 und 34 sind an den Hauptrahmen 12 über sich nach rechts und nach links erstreckende Tragarme 48 und 50 angeschlossen, wobei die Tragarme 48 und 50 mit ihren inneren Enden so an den Hauptrahmen angeschlossen sind, daß sie vertikal um eine horizontale Längsachse schwenken können, die durch einen Anschlußteil 52 definiert ist, der in einem unteren vorderen Bereich an dem Hauptrahmen, jedoch seitlich nach rechts versetzt von einer Längsmittelachse a des Rasenmähers liegt. Die äußeren Enden der Tragarme 48 und 50 werden durch Zylinderbuchsen 54 und 56 gebildet, von denen jede eine Längsachse aufweist, die parallel zu der Längsmittelachse a angeordnet ist. Die Mähwerke 32 und 34 sind an die Tragarme 48 und 50 durch identische Gelenkverbindungen 58 angeschlossen, die jeweils einen Bolzen 60 aufweisen, der in den Zylinderbuchsen 54 und 56 drehbar ist, sowie Gabelköpfe 62, die über Stifte 64 mit den jeweiligen Mitten der Befestigungsbügel 40 verbunden sind, so daß sie einen gleichen Abstand zu den gegenüberliegenden Enden der Schneidtrommel aufweisen. Das rückwärtige Mähwerk 36 ist an den Hauptrahmen über einen U-förmig ausgebildeten, nach vorne gerichteten Tragarm 66 angeschlossen, dessen vordere Enden an dem Hauptrahmen vertikal schwenkbar um eine horizontale Achse sind, die durch Gelenkverbindungen 68 gebildet wird, und zwar in etwa in einer vertikalen Querebene, die sich tangential zwischen den rückwärtigen Peripherieteilen der Laufräder 14 und 16 erstreckt. Der Tragarm 66 ist mit einer Buchse 70 versehen, die ähnlich wie die Zylinderbuchsen 54 und 56 ausgerichtet ist und mit Bezug auf die Längsmittelachse a nach rechts versetzt ist. Eine weitere Gelenkverbindung 58 ist mit ihrem Bolzen in der Buchse 70 gelagert, und ihr Gabelkopf ist mit der Mitte des Befestigungsbügels 40 der rückwärtigen Mäheinheit 36 verbunden.

In der Zeichnung sind die Mähwerke 32, 34 und 36 in ihrer abgesenkten Arbeitsposition dargestellt und für Geradeausfahrt ausgerichtet. Kraftbeaufschlagbare Hubelemente, beispielsweise nicht dargestellte hydraulisch beaufschlagbare Zylinder oder dergleichen, werden normalerweise dazu verwendet, um die Mähwerke 32 bis 36 aus ihrer Arbeitsposition in eine Transportposition zu verstellen. Normalerweise wirken diese hydraulisch beaufschlagbaren Zylinder zwischen dem Hauptrahmen 12 und den Tragarmen 48, 50 und 66 der Mähwerke.

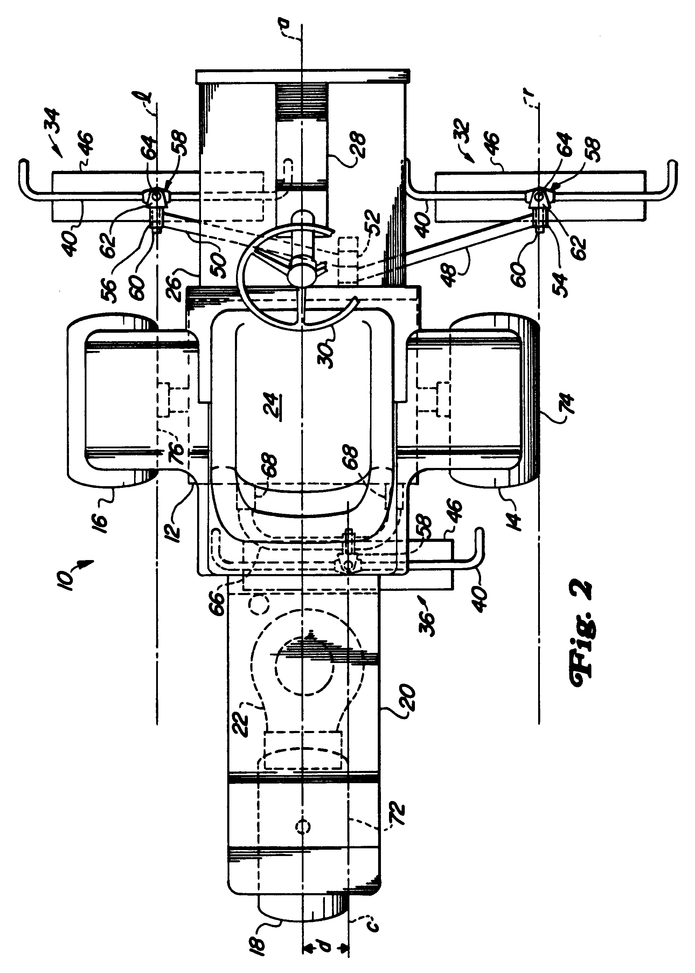

Aus Fig. 2 ist nun zu ersehen, daß die Mähwerke 32, 34 und 36 unsymmetrisch mit Bezug auf die Längsmittelachse a, aber symmetrisch mit Bezug auf eine Längsachse c angeordnet sind, die zur Längsmittelachse a um das Maß d nach rechts versetzt ist und mittig durch das rückwärtige Mähwerk verläuft. Das Maß d des seitlichen Versatzes entspricht hier der Hälfte der Breite der Laufräder, so daß die Längsachse c mit der rechten Seite 72 des rückwärtigen Laufrades 18 zusammenfällt. Ähnliche Mittellinien r und l laufen mittig durch die rechten und linken vorderen Mähwerke 32 und 34 und fallen mit der entsprechenden rechten Seite 74 und 76 der vorderen Laufräder 14 und 16 zusammen. Das Maß d des seitlichen Versatzes sollte wenigstens so groß wie in der Zeichnung dargestellt sein, kann jedoch auch größer sein, solange die Schneidtrommeln so ausgebildet sind, daß sie sich überlappen und das Gras vor den nachfolgenden Laufrädern schneiden.

Ein Rasenmäher mit derartig angeordneten Mähwerken kann wie folgt eingesetzt werden. Unter der Annahme, daß der vorherige Schnitt als Kreisschnitt im Uhrzeigerdrehsinn ausgeführt wurde, wird der jetzige Kreisschnitt entgegen dem Uhrzeigerdrehsinn am Rasenrand begonnen. Das rechte Ende der Schneidtrommel 46 des rechten vorderen Mähwerkes 32 wird dann auf der Rasenkante laufen, wobei dann das Laufrad 14 einer Spur folgt, die neben der liegt, in der das Laufrad 16 beim vorherigen Kreisschnitt lief. Auf diese Weise laufen die Laufräder nur bei jedem zweiten Schnitt in der gleichen Spur. So entstehen weniger Spurrillen, und auch der Boden wird weniger verdichtet, wie es bei herkömmlich angeordneten Mähwerken der Fall war. Ist nun der Kreisschnitt beendet, so kann man durch Hin- und Herfahren in zueinander parallel verlaufenden Bahnen einen Querschnitt ausführen. Auch bei diesem Schnitt laufen dann die Laufräder in unterschiedlichen Spuren, insbesondere dann, wenn man beim zweiten Schnitt in einer Richtung fährt, die der Richtung beim ersten Schnitt entgegengesetzt ist. Im ganzen gesehen kann hiermit immer die Startposition und auch der Schnittwinkel gleich gehalten werden, wodurch auch die Bedienungsperson das Schneiden einfacher durchführen kann.

**Patentansprüche**

1. Selbstfahrender Rasenmäher (10) mit zwei vorderen Laufrädern (14, 16), mindestens einem rückwärtigen Laufrad (18) und wenigstens drei mit Bezug auf die Fahrtrichtung jeweils vor einem Laufrad (14, 16, 18) angeordneten Mähwerken (32, 34, 36), wobei die Laufräder (14, 16, 18) symmetrisch zur Längsmittelachse (a) des Rasenmähers (10) angeordnet sind und die an beiden Seiten des Rasenmähers (10) außen liegenden Mähwerke (32, 34) einen Querabstand zueinander aufweisen, dadurch gekennzeichnet, daß eines der mit Querabstand angeordneten Mähwerke (32, 34) mit Bezug auf die Längsmittelachse (a) unsymmetrisch angeordnet ist.

2. Rasenmäher nach Anspruch 1, dadurch gekennzeichnet, daß eines der mit Querabstand angeordneten Mähwerke (32, 34) um wenigstens eine halbe Breite eines der vorderen Laufräder (14, 16) seitlich versetzt ist.

3. Rasenmäher nach Anspruch 1 mit symmetrisch zu einer Längsachse (c) angeordneten Mähwerken (32, 34, 36), dadurch gekennzeichnet, daß die Längsachse (c) zur Längsmittelachse (a) des Rasenmähers (10) seitlich parallel versetzt verläuft.

4. Rasenmäher nach Anspruch 3, dadurch gekennzeichnet, daß der seitliche Versatz der Längsachse (c) wenigstens eine halbe Breite eines der vorderen Laufräder (14, 16) beträgt.

5. Rasenmäher nach Anspruch 3, wobei die drei Mähwerke (32, 34, 36) zusammen eine Schnittbreite aufweisen, die größer ist als der äußere Querabstand der vorderen Laufräder (14, 16), dadurch gekennzeichnet, daß jeweils ein Mähwerk (32, 34) vor einem vorderen Laufrad (14, 16) und das dritte Mähwerk (36) vor dem rückwärtigen, in der Längsmittelachse (a) des Rasenmähers (10) angelenkten Laufrad (18) angeordnet ist, alle Mähwerke (32, 34, 36) eine gleiche Schnittbreite aufweisen und der Mittenabstand der vorderen Mähwerke (32, 34) der Spurweite des Rasenmähers (10) entspricht.

6. Rasenmäher nach Anspruch 5, dadurch gekennzeichnet, daß die Mittellinie (r, l) eines der vorderen Mähwerke (32, 34) mit der Außenseite eines der vorderen Laufräder (14, 16) zusammenfällt.

## Claims

1. Self-propelled lawn mower (10) with two front running wheels (14, 16), at least one rear running wheel (18) and at least three mowing mechanisms (32, 34, 36) arranged with reference to the direction of travel in each case in front of a running wheel (14, 16, 18), wherein the running wheels (14, 16, 18) are arranged symmetrically with respect to the longitudinal central axis (a) of the lawn mower (10) and the two mowing mechanisms (32, 34) lying outwardly at the two sides of the lawn mower (10) are transversely spaced from one another, characterized in that one of the mowing mechanisms (32, 34) arranged transversely spaced is arranged asymmetrically relative to the longitudinal central axis (a).

2. Lawn mower according to claim 1, characterized in that one of the mowing mechanisms (32, 34) arranged transversely spaced is displaced laterally by at least half the width of one of the front running wheels (14, 16).

3. Lawn mower according to claim 1 with mowing mechanisms (32, 34, 36) arranged symmetrically relative to a longitudinal axis (c), characterized in that the longitudinal axis (c) runs offset to the side parallel to the longitudinal axis (a) of the lawn mower (10).

4. Lawn mower according to claim 3, characterized in that the lateral displacement of the longitudinal axis (c) amounts to at least half the width of one of the front running wheels (14, 16).

5. Lawn mower according to claim 3, wherein the three mowing mechanisms (32, 34, 36) together have a width of cut which is greater than the outer transverse spacing of the front running wheels (14, 16), characterized in that one mowing mechanism (32, 34) is arranged in front of each front running wheel (14, 16) and the third mowing mechanism (36) in front of the rear running wheel (18) pivoting in the longitudinal central axis (a) of the lawn mower (10), all mowing mechanisms (32, 34, 36) have the same width of cut and the centre-to-centre spacing of the front mowing mechanisms (32, 34) corresponds to the track width of the lawn mower (10).

6. Lawn mower according to claim 5, characterized in that the centre line (r, l) of one of the front mowing mechanisms (32, 34) coincides with the outer side of one of the front running wheels (14, 16).

## Revendications

1. Tondeuse à gazon automobile (10) comportant deux roues avant (14,16), au moins une roue arrière (18) et au moins trois mécanismes de coupe (32,34,36) disposés en avant des roues respectives (14,16,18) dans la direction de déplacement, les roues (14,16,18) étant disposées symétriquement par rapport à l'axe médian longitudinal (a) de la tondeuse à gazon (10), tandis que les mécanismes de coupe (32,34) situés extérieurement des deux côtés de la tondeuse à gazon (10) sont séparés par une certaine distance transversale réciproque, caractérisée en ce que l'un des deux mécanismes de coupe (32,34) distants transversalement est disposé d'une manière dissymétrique par rapport à l'axe médian longitudinal (a).

2. Tondeuse à gazon selon la revendication 1, caractérisée en ce que l'un des mécanismes de coupe (32,34) distants transversalement est décalé latéralement d'une distance égale au moins à la moitié de la largeur de l'une des roues avant (14,16).

3. Tondeuse à gazon selon la revendication 1, comportant des mécanismes de coupe (32,34,36) disposés symétriquement par rapport à un axe longitudinal (c), caractérisée en ce que l'axe longitudinal (c) est parallèle et décalé latéralement par rapport à l'axe médian longitudinal (a) de la tondeuse à gazon (10).

4. Tondeuse à gazon selon la revendication 3, caractérisée en ce que le décalage latéral de l'axe longitudinal (c) est égal au moins à la moitié de la largeur de l'une des roues avant (14,16).

5. Tondeuse à gazon selon la revendication 3, dans laquelle les trois mécanismes de coupe (32,34,36) possèdent ensemble une largeur de coupe supérieure à la distance transversale extérieure entre les roues avant (14,16), caractérisée en ce que respectivement un mécanisme de coupe (32,34) est disposé devant une roue avant (14,16) et que le troisième mécanisme de coupe (36) est disposé en avant de la roue arrière (18) articulée au niveau de l'axe médian longitudinal (a) de la tondeuse à gazon (10), que tous les mécanismes de coupe (32,34,36) possèdent une même largeur de coupe et que la distance entre les centres des mécanismes de coupe avant (32,34) correspond à la largeur de voie de la tondeuse à gazon (10).

6. Tondeuse à gazon selon la revendication 5, caractérisée en ce que l'axe médian (r,l) de l'un des mécanismes de coupe avant (32,34) coïncide avec le côté extérieur de l'une des roues avant (14,16).

*Fig. 1*

EP 0 324 970 B1

**Fig. 2**

EP 0 324 970 B1